# EUROPEAN PATENT SPECIFICATION

(11) **EP 2 696 425 B1**
(45) Date of publication and mention of the grant of the patent: **10.05.2017**
(21) Application number: 12768085.8
(22) Date of filing: 19.03.2012
(51) Int. Cl.: H01M 10/04, H01M 2/18, H01M 2/16, H01M 10/052, H01M 10/42, H01M 10/0585

(54) **BATTERY, MANUFACTURING METHOD FOR BATTERY, AND SACKED ELECTRODE**
BATTERIE, HERSTELLUNGSVERFAHREN FÜR DIE BATTERIE UND UMMANTELTE ELEKTRODE
BATTERIE, PROCÉDÉ DE FABRICATION DE BATTERIE ET ÉLECTRODE EN SAC

(30) Priority: 07.04.2011 JP 2011085795; 29.12.2011 JP 2011290357
(43) Date of publication of application: 12.02.2014
(73) Proprietor: NISSAN MOTOR CO., LTD., Yokohama-shi, Kanagawa 221-0023 (JP)
(72) Inventor: KIM, Taewon, Kanagawa 243-0123 (JP); HISAJIMA, Kazumi, Kanagawa 243-0123 (JP)
(74) Representative: Hoefer & Partner Patentanwälte mbB
(86) International application number: PCT/JP2012/057015
(87) International publication number: WO 2012/137593

(56) References cited:
- EP-A1- 0 453 292
- WO-A1-2010/004927
- WO-A1-2010/134170
- JP-A- 2002 324 571
- JP-A- 2010 020 974
- JP-A- 2010 212 213
- JP-A- 2012 009 210
- JP-B2- 3 380 935

## Description

### TECHNICAL FIELD

The present invention relates to a battery, a battery manufacturing method, and a packaged electrode.

### BACKGROUND ART

In recent years, secondary batteries have been used in various products. A secondary battery includes a battery element formed by stacking positive electrodes, separators, and negative electrodes. It is important in the battery element that the positive electrodes and the negative electrodes are stacked on one another without positional displacement, with the separators interposed in between. This is because stacking misalignment contributes to degradation of battery performance and battery life.

Thus, to prevent positional displacement between the positive electrodes and the negative electrodes, it has been proposed to use packaged positive electrodes each made by joining edges of two separators together by thermal welding to form a package in advance, and then placing a positive electrode in the package (see Patent Literature 1). Since the position of the positive electrode is set by the thermally-welded portions of the separators, the positive electrode and a negative electrode can be stacked together with no stacking misalignment by staking the packaged positive electrode and the negative electrode together.

JP2010212213A discloses an electrode for a secondary battery with an electrode mixture in which an active material layer containing an active material is formed on the surface of a current collector is pinched by a pair of peeling prevention films, and at least a part of the peripheral part of the peeling prevention film is jointed to the other peeling prevention film opposed to it.

WO2010/134170A1 discloses a laminated secondary battery comprising anodes and cathodes, wherein the anodes are placed in a separator package.

EP0453292A1 discloses a lead acid storage battery that comprises a group of electrode plates, wherein a negative plate is enclosed in an enveloped separator joined together at both its edges by welding or mechanical sealing, wherein a glass mat is separately provided between the separator and a positive plate.

### CITATION LIST

### PATENT LITERATURE

Patent Literature 1: Japanese Patent No. 3380935

### SUMMARY OF INVENTION

### TECHNICAL PROBLEM

However, with the invention described in Patent Literature 1, the separators are thermally welded at portions very close to the edges of the positive electrode so that the positive electrode will not move inside the separators and be thereby displaced in position (see Fig. 3 in Patent Literature 1). This poses a risk that propagation of high-temperature heat applied in the thermal welding to the positive electrode results in degradation of the positive electrode due to the heat.

In addition, in the invention described in Patent Literature 1, the packaged positive electrode and the separators are formed into the same size (see Fig. 5 in Patent Literature 1). In this case, if the negative electrode is positioned on the welded portions of the separators and a minute hole is formed in the welded portions of the separators, short-circuit occurs to the negative electrode.

The present invention has been made in view of the above circumstances, and has an objective of providing a battery, a battery manufacturing method, and a packaged electrode capable of suppressing or avoiding degradation of a positive electrode due to heat applied in thermal welding of separators, and also capable of preventing short circuit through the welded portions.

### SOLUTION TO PROBLEM

A first aspect of the present invention is a battery including a packaged first electrode and a second electrode. The packaged first electrode is made by placing a first electrode in a package formed by joining at least part of end portions of two sheet-shaped separators or a folded single sheet-shaped separator together by thermal welding. The second electrode is stacked on the packaged first electrode and is larger than the first electrode. Here, welded portions of the separator formed by the thermal welding are provided outside an outer periphery of the second electrode, when seen in a stacking direction. The second electrode does not overlap with the welded portions of the separator so as to prevent short circuit through the welded portions from occurring.

A second aspect of the present invention is a battery manufacturing method including: a first step of forming a packaged first electrode by sandwiching a first electrode between two sheet-shaped separators or a folded single sheet-shaped separator and joining at least part of end portions of the respective separators together by thermal welding; and a second step of stacking a second electrode larger than the first electrode, on the packaged first electrode. In the first step, the end portions of the respective separators are thermally welded in advance at positions away from the first electrode so that welded portions of the separators formed by the thermal welding are provided outside an outer periphery of the second electrode when the second electrode is stacked in the later second step. The second electrode does not overlap with the welded portions of the separator so as to prevent short circuit through the welded portions from occurring.

Further, the description discloses a packaged electrode made by placing a first electrode in a package formed by joining at least part of edges of a separator together by thermal welding. With a second electrode, larger than and different in polarity from the first electrode, being stacked on the packaged electrode, welded portions of the separators formed by the thermal welding are provided outside an outer periphery of the second electrode, when seen in a stacking direction.

### BRIEF DESCRIPTION OF DRAWINGS

[Fig. 1] Fig. 1 is a perspective view showing the outer appearance of a lithium-ion secondary battery.
[Fig. 2] Fig. 2 is an exploded perspective view of the lithium-ion secondary battery.
[Fig. 3] Fig. 3 is a plan view of a negative electrode.
[Fig. 4] Fig. 4 is a plan view of a packaged positive electrode.
[Fig. 5] Fig. 5 is a diagram showing the positional relation between the packaged positive electrode and a positive electrode therein.
[Fig. 6] Fig. 6 is a sectional view taken along line VI-VI in Fig. 5.
[Fig. 7] Fig. 7 is a diagram showing how the positive electrode is positioned relative to separators.
[Fig. 8] Fig. 8 is a diagram showing another embodiment of a package-shaped separator.
[Fig. 9] Fig. 9 is a diagram showing how a tape is attached to part of a positive electrode.
[Fig. 10] Fig. 10 is a diagram showing how the positive electrode shown in Fig. 9 is packaged in separators.
[Fig. 11] Fig. 11 is a diagram showing how a negative electrode is stacked on a packaged positive electrode shown in Fig. 10.
[Fig. 12] Fig. 12 is a sectional view taken along line XII-XII in Fig. 11.

### DESCRIPTION OF EMBODIMENTS

Embodiments of the present invention are described below with reference to the attached drawings. Note that the ratios of dimensions in the drawings are exaggerated for description convenience, and may be different from the actual ones.

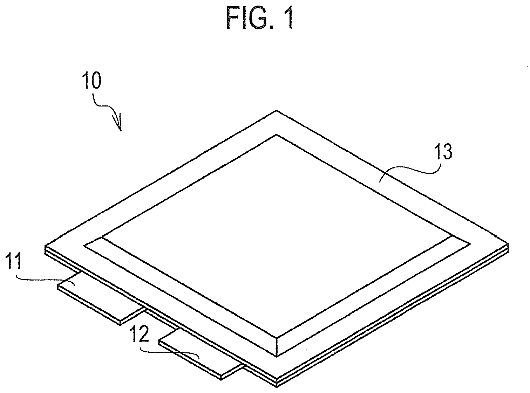

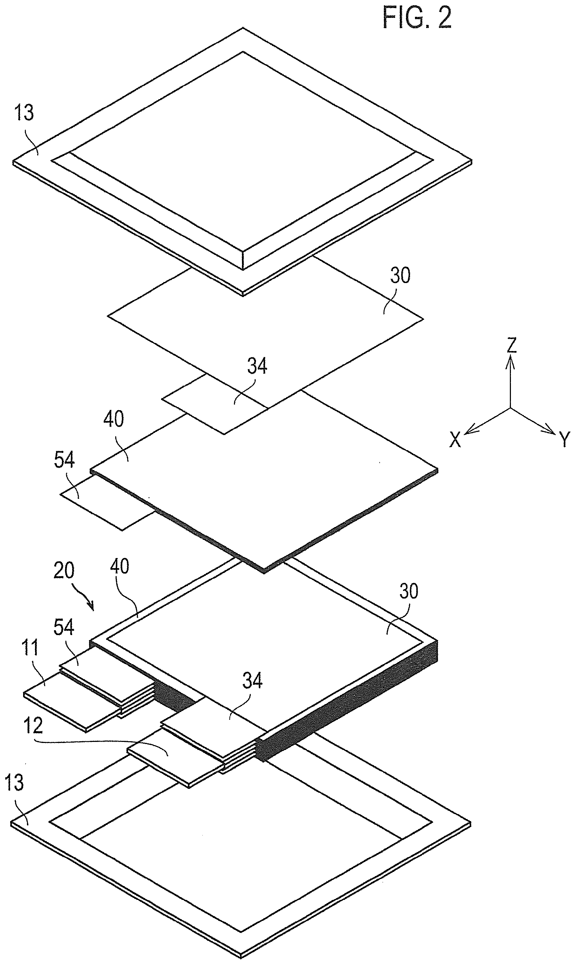

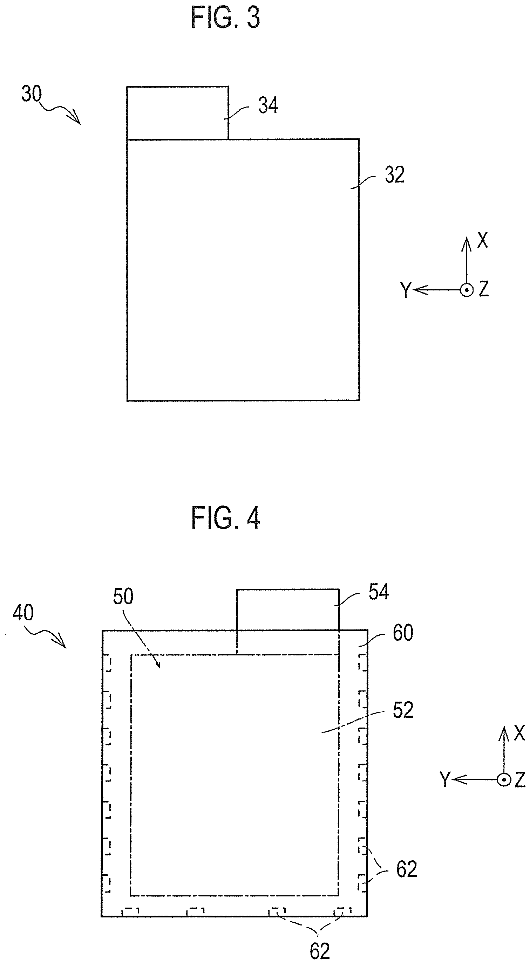

Fig. 1 is a perspective view showing the outer appearance of a lithium-ion secondary battery (stacked battery), Fig. 2 is an exploded perspective view of the lithium-ion secondary battery, Fig. 3 is a plan view of a negative electrode, and Fig. 4 is a plan view of a packaged positive electrode. In the drawings, a Z direction denotes a stacking direction, an X direction denotes a direction in which a positive-electrode lead 11 and a negative-electrode lead 12 are led out from an exterior material 13, and a Y direction denotes a direction orthogonal to the Z direction and the X direction. A direction parallel to an XY plane orthogonal to the Z direction is also referred to as a plane direction.

As shown in Fig. 1, a lithium-ion secondary battery 10 has a flat quadrangular shape, and the positive-electrode lead 11 and the negative-electrode lead 12 are led out from the same end portion of the exterior material 13. A power generation element (battery element) 20 in which charge-discharge reaction proceeds is housed inside the exterior material 13.

As shown in Fig. 2, the power generation element 20 is formed by alternately stacking negative electrodes 30 and packaged positive electrodes 40. Each negative electrode 30 is, as shown in Fig. 3, made by forming a negative-electrode active material layer 32 on each surface of an extremely thin, sheet-shaped negative-electrode collector. In the negative electrode 30, the negative-electrode active material layer 32 is formed at a portion other than a tab portion 34.

A positive electrode 50 is sandwiched between separators 60. The positive electrode 50 is made by forming a positive-electrode active material layer 52 on each surface of a sheet-shaped positive-electrode collector. The positive-electrode active material layer 52 is formed at a portion other than a tab portion 54 of the positive electrode 50. The tab portion 54 of the positive electrode 50 is led out from a package formed by the separators 60. The positive-electrode active material layer 52 is formed to be a little smaller than the negative-electrode active material layer 32 of the negative electrode 30. As shown in Fig. 4, the two separators 60 are formed into a package by being welded to each other at welded portions 62 at their end portions (edges). The welded portions 62 are formed by, for example, thermal welding.

Note that a method per se for manufacturing the lithium-ion secondary battery by alternately stacking the negative electrodes 30 and the packaged positive electrodes 40 is a general lithium-ion secondary battery manufacturing method, and is therefore not described in detail here.

Next, the position of the positive electrode 50 in the packaged positive electrode 40 is described.

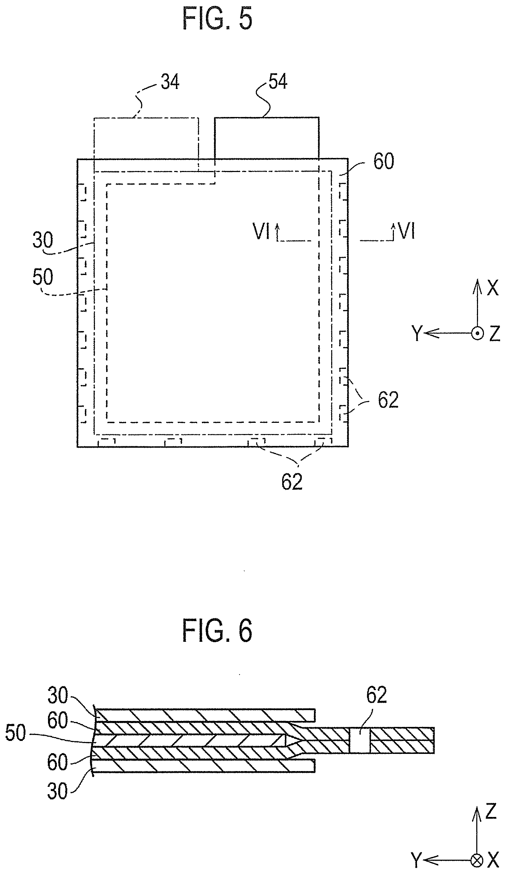

Fig. 5 is a diagram showing the positional relation between the packaged positive electrode and the positive electrode therein, and Fig. 6 is a sectional view taken along line VI-VI in Fig. 5. In Fig. 5, the position of the negative electrode 30 stacked on the packaged positive electrode 40 is shown with a dashed-dotted line.

As shown in Fig. 5, in the packaged positive electrode 40 of this embodiment, with the negative electrode 30 being stacked thereon, the welded portions 62 welding the separators 60 together are provided outside an outer periphery of the negative electrode 30, when seen in the stacking direction. Being smaller than the negative electrode 30 in a region overlapped with the separators 60, the positive electrode 50 is formed inside the negative electrode 30.

To be more specific, as shown in Fig. 6, in the region overlapped with the separators 60, the negative electrode 30 is formed inward of the welded portions 62 of the separators 60 in the plane direction, and the positive electrode 50 is formed inward of an outer edge of the negative electrode 30 in the plane direction. Thus, an outer edge of the positive electrode 50 is spaced away from the welded portions 62 in the plane direction by at least a distance between the outer edge of the negative electrode 30 and the welded portions 62 and a distance between the outer edge of the negative electrode 30 and the outer edge of the positive electrode 50. Since the sizes of the negative electrode 30, the positive electrode 50, and the welded portions 62 are thus defined, the positive electrode 50 is sufficiently spaced away from the welded portions 62 when the welded portions 62 are formed by thermal welding. Hence, degradation of the positive electrode 50 due to heat applied in thermal welding can be either suppressed or prevented. In addition, since the negative electrode 30 does not overlap with the welding portions 62 of the separators 60 when the negative electrode 30 and the packaged positive electrode 40 are stacked together, the negative electrode 30 is not short-circuited through the welded portions.

A method for manufacturing the secondary battery 10 is as follows.

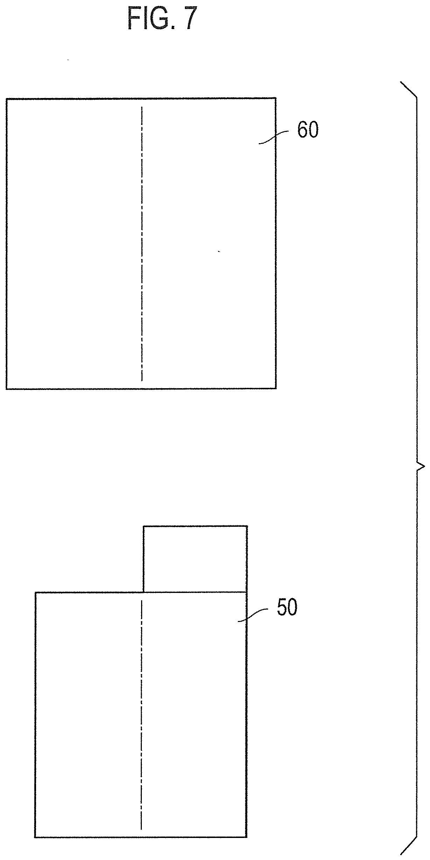

Fig. 7 is a diagram showing how to perform positional adjustment between the positive electrode and the separators.

The negative electrode 30, the positive electrode 50, and the separators 60 are formed so that they satisfy the above-described positional relations among the negative electrode 30, the positive electrode 50, and the welded portions 62. Specifically, the negative electrode 30 excluding the tab portion 34 is formed into a size smaller than the separators 60, and the positive electrode 50 excluding the tab portion 54 is formed into a size smaller than the negative electrode 30 excluding the tab portion 34. After the positive electrode 50 and the separators 60 are formed, positional adjustment is performed between the positive electrode 50 and the separators 60.

In the positional adjustment between the positive electrode 50 and the separator 60, for example, their respective center lines are found and aligned as shown in Fig. 7. Widthwise positional adjustment is thus accomplished. Lengthwise positional adjustment is accomplished by, for example, detecting a portion where the active material layer 52 of the positive electrode 50 is provided (a coated portion), and then aligning the coated portion with a predetermined position away from a lengthwise end portion of the separator 60.

With the positive electrode 50 in position, the positive electrode 50 is sandwiched between the two separators 60, and the welded portions 62 are formed at welded positions shown in Fig. 5. Thereby, the positive electrode 50 is placed inside the package formed by the separators 60. Positional adjustment is performed between the packaged positive electrode 40 thus formed and the negative electrode 30 such that they have the positional relations shown in Fig. 5. The power generation element 20 formed by stacking multiple packaged positive electrodes 40 and negative electrodes 30 is housed in the exterior material, and the battery 10 is thereby formed.

As described, the welded portions 62 are formed such that the end portions of the positive electrode 50 may be spaced from the welded portions 62 of the separators 60 based on the positional and dimensional relations among the negative electrode 30, the positive electrode 50, the separators 60, and the welded portions 62, shown in Fig. 5. In other words, when the negative electrode 30 and the packaged positive electrode 40 are stacked together, the welded portions 62 are located outside the outer edge of the negative electrode 30 in the plane direction. For this reason, the distance from the welded portions 62 to the end portion of the positive electrode 50 is at least equal to or larger than the distance from the welded portions 62 to the end portion of the negative electrode 30. Hence, degradation of the positive electrode 50 and the like due to heat applied in the thermal welding can be avoided. Moreover, since the positive electrode 50 and the separators 60 are adjusted in position before the thermal welding, the positive electrode 50 can be accurately placed in the separators 60.

In the above embodiment, as shown in Fig. 1, the positive-electrode lead 11 and the negative-electrode lead 12 are led out from the same end portion of the exterior material 13. However, the present invention is not limited to this case. The positive-electrode lead 11 and the negative-electrode lead 12 may be, for example, led out from opposite end portions. In this case, in forming the power generation element 20 of the secondary battery 10, the negative electrodes 30 and the packaged positive electrodes 40 are stacked such that their tab portions 34, 54 face opposite directions.

Further, although the positive electrode 50 is packed in the separators 60 in the above embodiment, the present invention is not limited to this example. The negative electrode 30 may be packed in the separators 60. In this case, the negative electrode 30 is formed to be smaller than the positive electrode 50.

### <Forming Package-shaped Separator>

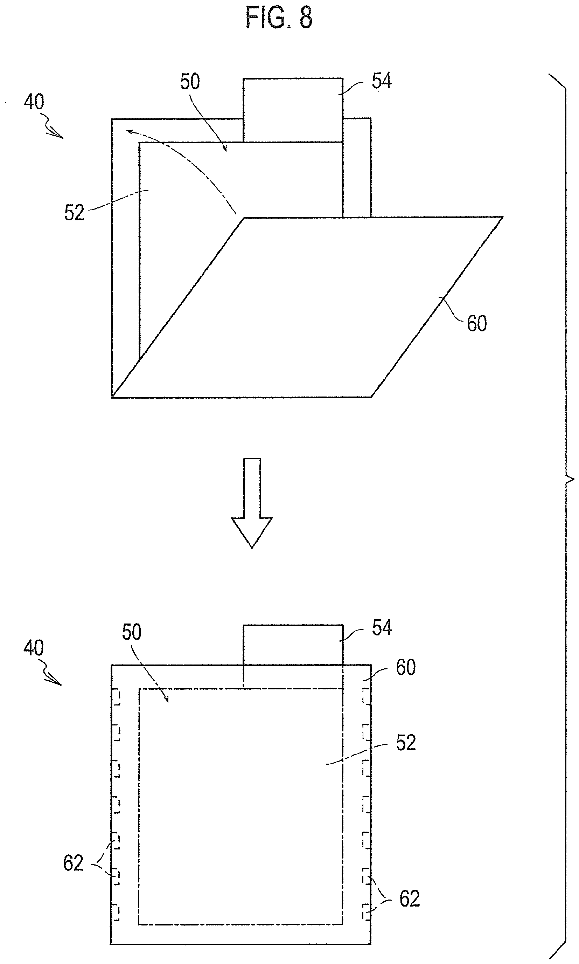

Fig. 8 is a diagram showing another embodiment of a package-shaped separator.

In the above embodiment, a package-shaped separator is formed by thermally welding part of the end portions of the two sheet-shaped separators 60. However, the present invention is not limited to this. As shown in Fig. 8, a package may be formed by folding a single sheet-shaped separator and joining at least part of overlapped end portions (edges) by thermal welding. According to a mode shown in Fig. 8, the positive electrode 50 is sandwiched by a single separator 60 long in a longitudinal direction, and the separator 60 is then folded in the longitudinal direction. Hence, compared to the mode shown in Fig. 4, only both sides of the separators 60 need to be joined by thermal welding. Specifically, in Fig. 8, the welded portions 62 are formed at left and right side edges.

Alternatively, although not shown, a single separator 60 having a lateral width about twice as large as that of the single separator 60 in Fig. 4 may be folded laterally, sandwiching the positive electrode 50. In this case, the welded portions 62 are formed at one of the side edges and a lower edge in Fig. 8.

### <Fixation of the Positive Electrode>

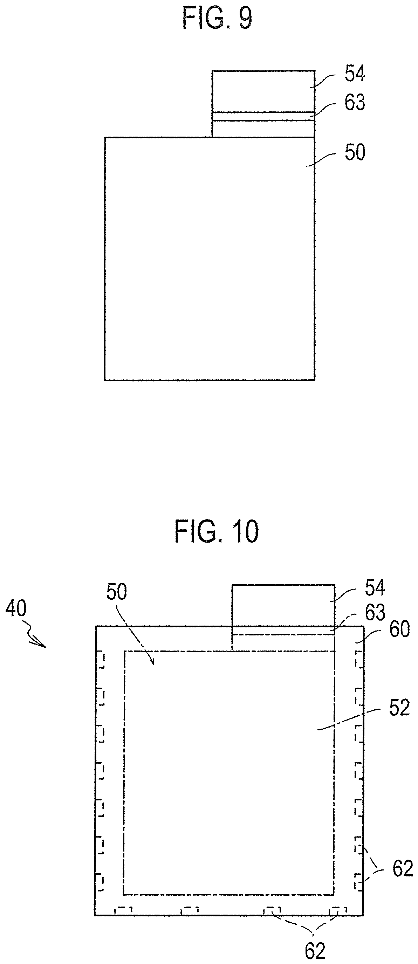

With reference to Figs. 9 to 12, a description is given of a mode in which the position of the positive electrode 50 is fixed inside the packaged positive electrode 40.

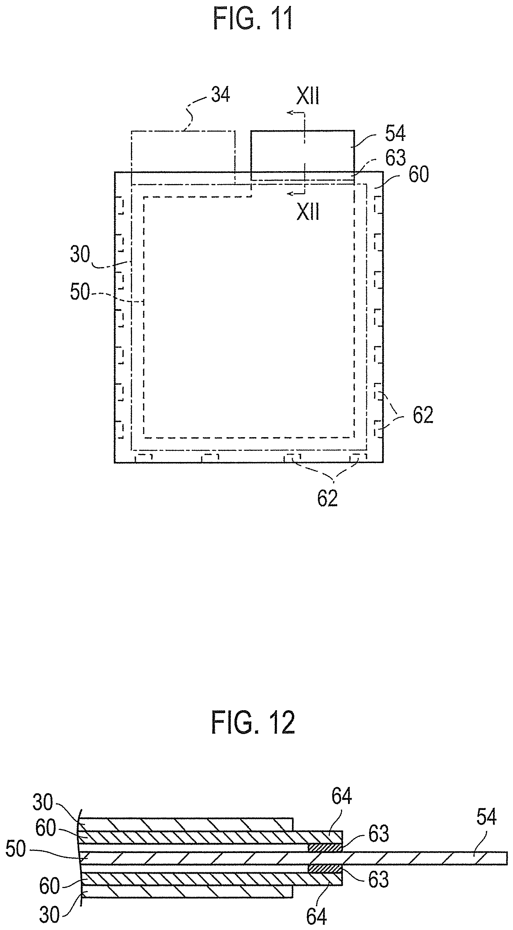

Fig. 9 is a diagram showing how a tape is attached to part of a positive electrode, Fig. 10 is a diagram showing how the positive electrode shown in Fig. 9 is packaged between separators, Fig. 11 is a diagram showing how a negative electrode is stacked on the packaged positive electrode shown in Fig. 10, and Fig. 12 is a sectional view taken along line XII-XII in Fig. 11.

As shown in Fig. 9, a tape (adhesive member) 63 having an adhesive surface is attached to part of the positive-electrode tab portion 54 of the positive electrode 50. The tape 63 is a double-sided tape whose both surfaces are adhesive. The tape 63 is attached to the positive-electrode tab portion 54 at each of its flat surfaces in the stacking direction.

As shown in Fig. 10, with the tape 63 being attached to the positive electrode 50, the separators 60 are stacked on both sides of the positive electrode 50. The outer edges of the separators 60 are welded at the welded portions 62, and thus the separators 60 are formed into the shape of a package. In the package formed by the separators 60 of the packaged positive electrode 40 thus formed, the tapes 63 attached to respective outer surfaces of the positive-electrode tab portion 54 of the positive electrode 50 are bonded to inner surfaces of the respective separators 60. The positive electrode 50 is thereby fixed to the separators 60, and in other words, is integrated with the separators 60. In the modes shown in Figs. 9 and 10 in particular, the tapes 63 are attached to the positive-electrode tab portion 54, and therefore the position of the positive-electrode tab portion 54 relative to the separators 60 is not displaced.

Transport or the like of the packaged positive electrode 40 does not cause positional displacement of the positive electrode 50 inside the package-shaped separators 60. Hence, as shown in Fig. 11, in stacking the negative electrode 30 and the packaged positive electrode 40 together, the position of the negative electrode 30 and the position of the positive electrode 50 in the packaged positive electrode 40 are uniformly determined only if the positional adjustment is performed between the negative electrode 30 and the packaged positive electrode 40. Fig. 12 shows the section of the tapes 63 with the negative electrode 30 and the packaged positive electrode 40 being stacked. The tapes 63 bond both surfaces of the positive-electrode tab portion 54 to portions 64 of the inner surfaces of the separators 60, respectively, thereby fixing the position of the positive electrode 50.

Fixing the positive electrode 50 as described above does not allow the positive electrode 50 to move inside the packaged positive electrode 40 and to come into contact with the negative electrode 30 in stacking of the negative electrode 30 and the packaged positive electrode 40. Even under such an environment that an assembled battery, formed by stacking multiple negative electrodes 30 and packaged positive electrodes 40, receives external vibration or shock by being transported in a manufacturing process or mounted on a vehicle, the relative position of the positive electrode 50 is stably maintained inside the packaged positive electrode 40. The position of the positive electrode 50 is not displaced little by little to come into contact with the negative electrode 30 and to cause short circuit.

Although the adhesive tape 63 is attached to each surface of the positive-electrode tab portion 54 of the positive electrode 50 in the above mode, the present invention is not limited to this mode. As long as the relative position of the positive electrode 50 is fixed to the separators 60, the tape 63 may be attached only to one surface of the positive-electrode tab portion 54. Moreover, the position at which the tape 63 is attached does not have to be in line with the edge of the separator 60, but may be located slightly inside or outside the package formed by the separators 60.

Although the positive electrode 50 is fixed inside the separators 60 as a packaged electrode in the above mode, the present invention is not limited to this mode. The negative electrode 30 may be fixed inside the separators 60.

The embodiments of the present invention are described above. However, the embodiments are mere examples described only to facilitate understanding of the present invention, and the present invention is not limited to the embodiments. The technical scope of the present invention includes not only the specific technical matters disclosed in the embodiments, but also various modifications, changes, alternative techniques, and the like which can be easily led therefrom.

### INDUSTRIAL APPLICABILITY

According to a battery and a battery manufacturing method of the present invention, when a packaged positive electrode and a negative electrode are stacked together, welded portions are located outside of the outer edge of the negative electrode.
Thus, the positive electrode is spaced away from the welded portions by at least a distance from the welded portions to an end portion of the negative electrode. Consequently, degradation of the positive electrode and the like due to heat applied in thermal welding can be avoided. In addition, since the negative electrode does not overlap with the welded portions of the separators, short circuit through the welded portions does not occur.

Moreover, according to a packaged electrode of the present invention, when a second electrode is stacked on a packaged electrode, welded portions are located outside of an outer edge of the second electrode. Thus, a first electrode is spaced away from the welded portions by at least a distance from the welded portions to an end portion of the second electrode. Consequently, degradation of the first electrode and the like due to heat applied in thermal welding can be avoided. In addition, since the negative electrode does not overlap with the welded portions of the separators, short circuit through the welded portions does not occur.

### REFERENCE SIGNS LIST

- 10: secondary battery
- 20: power generation element
- 30: negative electrode
- 32: negative-electrode active material layer
- 34: negative-electrode tab portion
- 40: packaged positive electrode
- 50: positive electrode
- 52: positive-electrode active material layer
- 54: positive-electrode tab portion
- 60: separator
- 62: welded portion
- 63: tape

## Claims

1. A battery (10) comprising:
a packaged electrode (40) made by placing a first electrode (50) in a package formed by joining at least part of end portions of two sheet-shaped separators or a folded single sheet-shaped separator (60) together by thermal welding; and
a second electrode (30) stacked on the packaged electrode (40), wherein
the second electrode (30) is larger than the first electrode (50),
**characterized in that**
the welded portions (62) of the separator (60) formed by the thermal welding are provided outside an outer periphery of the second electrode (30), when seen in a stacking direction, and
the second electrode (30) does not overlap with the welded portions (62) of the separator (60) so as to prevent short circuit through the welded portions (62) from occurring.

2. The battery (10) according to claim 1, wherein
the first electrode (50) is a positive electrode, and the second electrode (30) is a negative electrode.

3. The battery (10) according to claim 1 or 2, wherein
inside the packaged electrode (40), an outer surface of the first electrode (50) is bonded to an inner surface of the separator (60) with an adhesive member (63).

4. A battery manufacturing method comprising:
a first step of forming a packaged electrode (40) by sandwiching a first electrode (50) between two sheet-shaped separators or a folded single sheet-shaped separator (60) and joining at least part of end portions of the respective separators (60) together by thermal welding; and
a second step of stacking a second electrode (30) on the packaged electrode (40),
wherein the second electrode (30) is larger than the first electrode (50), **characterized in that**
in the first step, the end portions of the respective separators (60) are thermally welded in advance at positions away from the first electrode (50) so that the welded portions (62) of the separators (60) formed by the thermal welding are provided outside an outer periphery of the second electrode (30) when the second electrode (30) is stacked in the later second step, and
the second electrode (30) does not overlap with the welded portions (62) of the separator (60) so as to prevent short circuit through the welded portions (62) from occurring.

5. The battery manufacturing method according to claim 4, wherein
the first electrode (50) is a positive electrode, and the second electrode (30) is a negative electrode.

6. The battery manufacturing method according to claim 4 or 5, wherein
to sandwich the first electrode (50) between the sheet-shaped separators or a folded single sheet-shape separator (60) in the first step, a center line of the first electrode (50) is detected, and the center line is aligned with center lines of the separators (60).

7. The battery manufacturing method according to any one of claims 4 to 6, wherein
the packaged electrode (40) forms a package by joining at least part of end portions of the two sheet-shaped separators (60) together by thermal welding.

8. The battery manufacturing method according to any one of claims 4 to 6, wherein
the packaged electrode (40) forms a package by folding the single sheet-shaped separator (60) and joining at least part of overlapped end portions of the separator (60) together by thermal welding.

## Patentansprüche

1. Batterie (10), umfassend:
eine gepackte Elektrode (40), die durch Platzieren einer ersten Elektrode (50) in einer Packung hergestellt ist, die durch Verbinden zumindest eines Teils von Endbereichen zweier plattenförmiger (60) Separatoren oder eines gefalteten einzelnen plattenförmigen Separators (60) durch thermisches Verschweißen miteinander gebildet wird; und
eine zweite Elektrode (30) die auf die gepackte Elektrode (40) gestapelt ist, wobei die zweite Elektrode (30) größer als die erste Elektrode (50) ist,
**dadurch gekennzeichnet, dass**
die verschweißten Bereiche (62) des durch thermisches Verschweißen gebildeten Separators (60) in Stapelrichtung gesehen außerhalb eines Außenumfangs der zweiten Elektrode (30) vorgesehen sind, und
die zweite Elektrode (30) nicht mit den verschweißten Bereichen (62) des Separators (60) überlappt, sodass ein Auftreten eines Kurzschlusses durch die verschweißten Bereichen (62) verhindert wird.

2. Batterie (10) nach Anspruch 1, wobei
die erste Elektrode (50) eine positive Elektrode ist, und die zweite Elektrode (30) eine negative Elektrode ist.

3. Batterie (10) nach Anspruch 1 oder 2, wobei
im Innern der gepackten Elektrode (40) eine Außenfläche der ersten Elektrode (50) an eine Innenfläche des Separators (60) mit einem Klebeelement (63) gebondet ist.

4. Batterie-Herstellungsverfahren, umfassend:
einen ersten Schritt des Ausbildens einer gepackten Elektrode (40) durch Einfügen einer ersten Elektrode (50) zwischen zwei plattenförmige Separatoren oder einen gefalteten einzelnen plattenförmigen Separator (60) und des Verbindens zumindest eines Teils von Endbereichen der jeweiligen Separatoren (60) durch thermisches verschweißen miteinander; und
einen zweiten Schritt des Stapelns einer zweiten Elektrode (30) auf die gepackte Elektrode (40),
wobei die zweite Elektrode (30) größer als die erste Elektrode (50) ist,
**dadurch gekennzeichnet, dass**
im ersten Schritt die Endbereiche der jeweiligen Separatoren (60) vorab an von der ersten Elektrode (50) entfernten Positionen thermisch verschweißt werden, sodass die verschweißten Bereiche (62) der durch thermisches Verschweißen gebildeten Separatoren (60) außerhalb eines Außenumfangs der zweiten Elektrode (30) vorgesehen sind, wenn die zweite Elektrode (30) in einem späteren zweiten Schritt gestapelt wird, und
die zweite Elektrode (30) die verschweißten Bereiche (62) des Separators (60) nicht überlappt, sodass das Auftreten eines Kurzschlusses durch die verschweißten Bereiche (62) verhindert wird.

5. Batterie-Herstellungsverfahren nach Anspruch 4, wobei die erste Elektrode (50) eine positive Elektrode ist, und die zweite Elektrode (30) eine negative Elektrode ist.

6. Batterie-Herstellungsverfahren nach Anspruch 4 oder 5, wobei zum Einfügen der ersten Elektrode (50) zwischen die plattenförmigen Separatoren oder einen gefalteten einzelnen plattenförmigen Separator (60) im ersten Schritt eine Mittellinie der ersten Elektrode (50) erfasst wird, und die Mittellinie zu Mittellinien der Separatoren (60) ausgerichtet wird.

7. Batterie-Herstellungsverfahren nach einem der Ansprüche 4 bis 6, wobei die gepackte Elektrode (40) eine Packung durch Verbinden zumindest eines Teils von Endbereichen der beiden plattenförmigen Separatoren (60) durch thermisches Verschweißen miteinander bildet.

8. Batterie-Herstellungsverfahren nach einem der Ansprüche 4 bis 6, wobei die gepackte Elektrode (40) eine Packung durch Falten des einzelnen plattenförmigen Separators (60) und Verbinden zumindest eines Teils von überlappten Endbereichen des Separators (60) durch thermisches Verschweißen miteinander bildet.

## Revendications

1. Batterie (10) comprenant :
une électrode emballée (40) réalisée en plaçant une première électrode (50) dans un emballage formé en assemblant par soudage thermique au moins une partie de portions d'extrémité de deux séparateurs en forme d'une feuille ou au moins une partie de portions d'extrémité d'un seul séparateur plié en forme d'une feuille (60) ; et
une deuxième électrode (30) empilée sur l'électrode emballée (40), où la deuxième électrode (30) est plus grande que la première électrode (50),
**caractérisée en ce que**
les parties soudées (62) du séparateur (60) formées par soudage thermique sont prévues à l'extérieur d'une périphérie extérieure de la deuxième électrode (30), lorsqu'elles sont vues dans une direction d'empilement, et
la deuxième électrode (30) ne chevauche pas les parties soudées (62) du séparateur (60) de manière à empêcher un court-circuit à travers les parties soudées (62) de se produire.

2. Batterie (10) selon la revendication 1, dans laquelle
la première électrode (50) est une électrode positive, et la deuxième électrode (30) est une électrode négative.

3. Batterie (10) selon la revendication 1 ou 2, dans laquelle
à l'intérieur de l'électrode emballée (40), une surface extérieure de la première électrode (50) est liée à une surface intérieure du séparateur (60) avec un élément adhésif (63).

4. Procédé de fabrication de batterie comprenant :
une première étape qui consiste à former une électrode emballée (40) en coinçant une première électrode (50) entre deux séparateurs en forme de feuille ou un seul séparateur plié en forme de feuille (60) et en assemblant au moins une portion de parties d'extrémité des séparateurs respectifs (60) par soudage thermique ; et
une deuxième étape qui consiste à empiler une deuxième électrode (30) sur l'électrode emballée (40),
dans lequel la deuxième électrode (30) est plus grande que la première électrode (50),
**caractérisé en ce que**
dans la première étape, les parties d'extrémité des séparateurs respectifs (60) sont soudées thermiquement à l'avance à des positions éloignées de la première électrode (50) de sorte que les parties soudées (62) des séparateurs (60) formées par le soudage thermique soient prévues à l'extérieur d'une périphérie extérieure de la deuxième électrode (30) lorsque la deuxième électrode (30) est empilée dans la deuxième étape ultérieure, et
la deuxième électrode (30) ne chevauche pas les parties soudées (62) du séparateur (60) de manière à empêcher un court-circuit à travers les parties soudées (62) de se produire.

5. Procédé de fabrication de batterie selon la revendication 4, dans lequel
la première électrode (50) est une électrode positive, et la deuxième électrode (30) est une électrode négative.

6. Procédé de fabrication de batterie selon la revendication 4 ou 5, dans lequel
pour coincer la première électrode (50) entre les séparateurs en forme de feuille ou un seul séparateur plié en forme de feuille (60) dans la première étape, une ligne centrale de la première électrode (50) est détectée et la ligne centrale est alignée avec des lignes centrales des séparateurs (60).

7. Procédé de fabrication de batterie selon l'une quelconque des revendications 4 à 6, dans lequel
l'électrode emballée (40) forme un emballage en assemblant au moins une partie de portions d'extrémité des deux séparateurs en forme de feuille (60) par soudage thermique.

8. Procédé de fabrication de batterie selon l'une quelconque des revendications 4 à 6, dans lequel
l'électrode emballée (40) forme un emballage en pliant le seul séparateur en forme de feuille (60) et en assemblant au moins une partie de portions d'extrémité chevauchantes du séparateur (60) par soudage thermique.
